# EUROPEAN PATENT APPLICATION

(11) **EP 3 400 811 A1**
(43) Date of publication of application: **14.11.2018**
(21) Application number: 17170161.8
(22) Date of filing: 09.05.2017
(51) Int. Cl.: A23L 5/10, A23L 7/10, A23L 7/196, A47J 27/04, A47J 27/00, A23L 7/187

(54) **METHOD AND APPARATUS FOR COOKING STARCH-CONTAINING FOOD**

(71) Applicant: Koninklijke Philips N.V., 5656 AE Eindhoven (NL)
(72) Inventor: SU, Guangming, 5656 AE Eindhoven (NL); SUN, Wen, 5656 AE Eindhoven (NL); CHEN, Yun, 5656 AE Eindhoven (NL); LU, Weihua, 5656 AE Eindhoven (NL)
(74) Representative: de Haan, Poul Erik

(57) **Abstract**

There is provided an apparatus (100, 200) and method (300) of cooking starch-containing food. A vessel (202) of the apparatus (100, 200) is directly heated in a pretreatment step (304) to at least partially puff the starch-containing food before the at least partially puffed starch-containing food is cooked (308) in the same vessel (202) in one or both of water and steam.

## Description

### FIELD OF THE INVENTION

The invention relates to a method and an apparatus for cooking starch-containing foods, for example grains and legumes, such as a table-top domestic cooker such as may be used for cooking rice.

### BACKGROUND TO THE INVENTION

The health and nutritional benefits of eating starchy foods which are also high in fibre is well established. In particular, it is known that eating so-called wholegrain foods, such as brown rice, is an effective way to reduce the risk of diabetes and control weight gain as the fibre-rich bran layer of the grain leads to feelings of satiety sooner when consumed, translating to smaller meal portions. This fibre-rich outer or bran layer, the pericarp, comprises hemicellulose and cellulose and so also contributes to healthy bowel function as it facilitates the digestive processes. In addition, wholegrains and legumes are rich in essential minerals such as selenium and manganese, as well as anti-oxidants.

When compared to white, or polished rice, which has had the bran layer removed, cooking of wholegrain or brown rice requires a longer cooking time and does not result in the enjoyable taste and texture of cooked white rice. Fibre-rich staple foods, normally considered as tough, less chewable and tasteless, are not attractive for consumers.

However, it is not possible in a domestic situation to quickly cook such foods in a way to enjoy the benefits of "whole grain" nutrition and the taste and texture of processed foods.

Thus, there is a need for an improved apparatus and method for cooking starch-containing foods such as grains and legumes.

### SUMMARY OF THE INVENTION

As noted above, a limitation of existing methods and apparatus is that it is not possible to cook starchy foods such as whole grains or legumes having a fibre containing outer layer while achieving the taste and texture of a processed food.

Therefore, according to a first aspect of the invention, there is provided a method of cooking a starch-containing food, the method comprising:
pre-treating the starch-containing food in a vessel heated directly to a temperature greater than 140 °C to at least partially puff the starch-containing food; and
cooking the at least partially puffed starch-containing food in one or both of water and steam;
wherein the cooking step is performed subsequent to the pre-treating step whilst the at least partially puffed starch-containing food remains in the vessel.

This method has the beneficial effects of reducing the cooking time for the starch-containing food, while simultaneously increasing the volume of the starch-containing food so that a person needs to consume less in order to satiate their appetite and so contribute to the control of the person's weight.

Pre-treating the starch-containing food in a vessel heated directly to a temperature of greater than 140 °C has been found to be optimum for effective expansion of most types or varieties of cereal grain taking into account different grain characteristics, types and moisture content. Unless otherwise stated, references herein to "pre-treating", or "pre-treatment" or to the heating of the starch-containing food under conditions such that it expands or puffs due to rapid heating of residual moisture within the starch-containing food to cause buildup of pressure and rupture of an outer layer of the starch-containing food. The pre-treatment step may also cause initial gelatinization of the starchy interior, resulting in a shorter time required for the subsequent cooking step of the method.

By carrying out both steps using the same cooking apparatus, and without having to transfer the cereal grain from one vessel to another, the method is carried out easily and the cereal grain is cooked more quickly and thoroughly with little or no time to cool between steps, thereby maintaining efficiency and simplifying the cooking method.

In some embodiments, the vessel is heated conductively or inductively. By directly heating the vessel in this way, an efficient process for quickly puffing the starch-containing food can be achieved.

In some embodiments, the method further comprises the step of pre-heating the vessel prior to placing the starch-containing food in the vessel.

By directly pre-heating the vessel before placing the starch-containing food into it, thermal efficiency is improved and puffing of the food more rapidly. Pre-heating the vessel can also prevent the food from acquiring a dark appearance during the first step.

In some embodiments, the method further comprises a stirring step in one or both of the pre-treating and cooking steps to evenly distribute heat.

In some embodiments, the method further comprises providing water from a reservoir to the vessel in the cooking step. By maintaining water in a reservoir within the apparatus, water can be supplied to the vessel quickly and thereby enable the second step to be carried out immediately upon completion of the first step, thereby minimizing cooking time and simplifying the process.

In some embodiments, the method further comprises pre-treating the starch-containing food for less than 2 minutes in a vessel heated directly to a temperature greater than 160 °C. Pre-treatment under these conditions results in effective expansion of most types or varieties of starch-containing food, taking into account different grain characteristics, types and moisture content.

The second step of cooking the at least partially puffed starch-containing food in one or both of water and steam may comprise initially subjecting the at least partially puffed starch-containing food to water at any temperature including, for example, ambient temperature or 25 °C. The water is then heated to boiling point in order to cook the at least partially puffed starch-containing food. However, the water may initially be pre-heated so that it is at an elevated temperature prior to being introduced to the vessel.

In some embodiments, the cooking step comprises subjecting the at least partially puffed starch-containing food to water that has been pre-heated to a temperature between 60 and 80 °C upon commencement of the cooking step. If present, a heating element used to conductively heat the vessel during performance of the first step may also be used to pre-heat the water for use in the second step so that maximum efficiency and reduced cooking time is achieved.

In some embodiments, the cooking step comprises subjecting the at least partially puffed starch-containing food to water having a temperature below boiling point upon commencement of the cooking step, and heating the water during performance of the cooking step.

In some embodiments, a reservoir surrounds the vessel and a heating element is positioned so that water contained in the reservoir is pre-heated by the heating element prior to flowing from the reservoir.

By positioning the heating element so that it pre-heats the water in the reservoir during the pre-treatment step, cooking of the at least partially puffed starch-containing food begins more rapidly when the is fed to the vessel in the cooking step.

According to a second aspect of the invention, there is provided an apparatus for cooking a starch-containing food, the apparatus comprising:
a vessel to receive the starch-containing food;
a control unit being configured, in a pre-treating step, to control heat in the vessel to at least partially puff starch-containing food; the control unit being further configured, in a cooking step, to control heat in the vessel to cook the at least partially puffed starch-containing food in one or both of water and steam;
wherein the apparatus is configured to directly heat the vessel during one or both of the pre-treating step and the cooking step.

In some embodiments, the apparatus further comprises a heater and the control unit controls the heater to control heat in the vessel by conduction from the heater; or the control unit controls heat in the vessel by induction. Directly heating the vessel in these ways results in an efficient process for heating the vessel.

In some embodiments, the apparatus further comprises a stirring tool provided within the vessel, to ensure even distribution of heat within the starch-containing food.

In some embodiments, the apparatus further comprises an air outlet valve for releasing air or moisture from the vessel. Releasing moisture from the vessel during the pre-treatment step ensures good expansion of the starch-containing food.

In some embodiments, the vessel comprises a fluid-impermeable wall. By having a fluid impermeable wall, the vessel can be filled with water in the cooking step, thereby submerging the starch-containing food ensuring effective and even heat distribution and efficient cooking.

In some embodiments, the apparatus further comprises a reservoir for containing water to be provided into the vessel. By maintaining water in a reservoir within the apparatus, water can be supplied to the vessel quickly and thereby enable the second step to be carried out immediately upon completion of the first step, thereby minimizing cooking time and simplifying the process.

In some embodiments, the control unit is configured to trigger supply of water from the reservoir to the vessel. By having the flow of water under control of the control unit, a fully automated process can be realized. In this way, a user needs to only add the starch-containing food to the vessel, add water to the reservoir and start a cooking program under control of the control unit. The user can then leave the apparatus to cook the starch-containing food and return to ready-to-eat food once the program has terminated.

In some embodiments, the heater is positioned so that water contained in the reservoir is pre-heated by the heater prior to flowing out from the reservoir. By positioning the heating element so that it pre-heats the water in the reservoir during the pre-treatment step, cooking of the at least partially puffed starch-containing food begins more rapidly when the is fed to the vessel in the cooking step.

According to a third aspect of the invention, there is provided a computer program product comprising a computer readable medium having computer readable code embodied therein, the computer readable code being configured such that, on execution by a control unit of a apparatus for cooking a starch-containing food, the control unit is caused to perform the method of the first aspect.

According to the aspects and embodiments described above, the limitations of existing methods and apparatus are addressed. For example, it is possible in a domestic situation to at least partially puff starch-containing foods, and then cook the at least partially puffed starch-containing food in the vessel in which it was puffed. By at least partially puffing the starch-containing food before cooking, the pericarp is ruptured, allowing a reduced cooking time. In this way, it is now possible in the home to more quickly enjoy the nutritional benefits of starchy foods such as whole grains and legumes while having the taste and texture of processed foods.

There is thus provided an improved apparatus and method for cooking starch-containing foods such as grains and legumes, which overcome the existing problems.

### BRIEF DESCRIPTION OF THE DRAWINGS

For a better understanding of the invention, and to show more clearly how it may be carried into effect, reference will now be made, by way of example only, to the accompanying drawings, in which:
Figure 1 is a block diagram of an apparatus according to an embodiment;
Figure 2a shows an example apparatus according to an embodiment;
Figure 2b shows a stirring tool of an apparatus according to an embodiment;
Figure 3 is a flow chart illustrating a method of operating an apparatus to cook starch containing foods according to an embodiment.

### DETAILED DESCRIPTION OF EMBODIMENTS

Conventional rice cookers, such as domestic rice cookers provide a vessel in which starchy foods such as grains, or legumes, are to be cooked. However, this does not allow a user to cook the unprocessed starch-containing food in a manner which results in the nutritional benefits of eating the fibre-rich outer layer, while enjoying the taste and texture of the inner part of the starch-containing food. As noted above, the invention provides an improved apparatus and method, which overcome the existing problems.

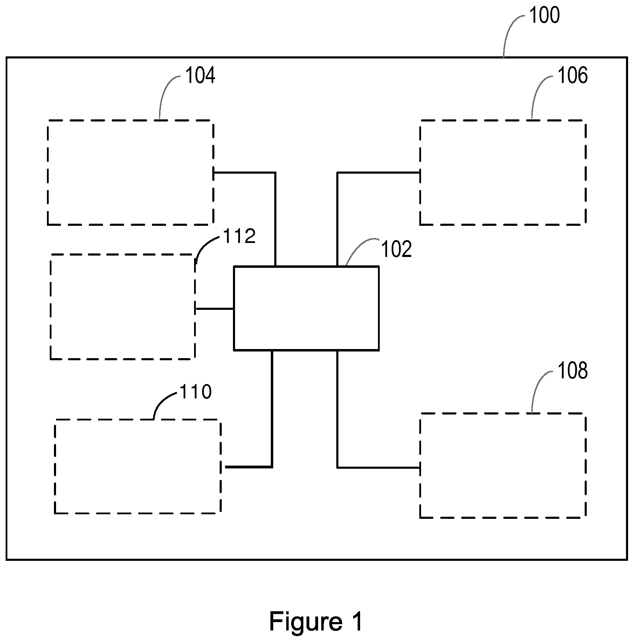

Figure 1 shows a block diagram of an apparatus 100 according to an embodiment that can be used for cooking starch-containing foods.

Generally, the apparatus 100 may comprise a table-top domestic appliance, such as a rice cooker and has as its components those usually found in such an appliance. In an embodiment, the apparatus 100 comprises a vessel (not shown) in which the starch-containing food is at least partially puffed and cooked. The apparatus 100 may further comprise a lid or cover to seal the vessel during the cooking process. In one embodiment, the vessel comprises a fluid impermeable wall. This allows water to fill the vessel during the cooking step, so that the at least partially puffed starch-containing food is at least partially submerged in the water, to ensure an efficient cooking process.

The apparatus 100 comprises a control unit 102 that controls the operation of the apparatus 100 and that can implement the method described herein. The control unit 102 can comprise one or more processors, control units, multi-core processors or modules that are configured or programmed to control the apparatus 100 in the manner described herein. In particular implementations, the control unit 102 can comprise a plurality of software and/or hardware modules that are each configured to perform, or are for performing, individual or multiple steps of the method according to embodiments of the invention.

Briefly, the control unit 102 of the apparatus 100 is configured to control the temperature of the vessel. In some embodiments, the control unit controls the direct direct heating of the vessel. References herein to direct heat, or direct heating are to methods of generating elevated temperatures in a vessel by conductive or inductive means. As used herein, direct heat excludes methods of generating heat by indirect, i.e. convective means. In one embodiment, the control unit 102 directly controls heat in the vessel inductively. Induction heating is the process of heating an electrically conducting object by electromagnetic induction as is known in the art, in one example of inductive means, the vessel itself is part of the heater. In one embodiment, the control unit 102 directly controls heat in the vessel conductively using a heating element in efficient thermal contact with the vessel.

Returning back to the illustrated embodiment of Figure 1, in this illustrated embodiment, the apparatus 100 comprises the user interface 104 that is controlled by the control unit 102. Alternatively, the user interface 104 may be external to (i.e. separate to or remote from) the apparatus 100. For example, the user interface 104 may be part of another apparatus. The user interface 104 allows a user to program and operate the apparatus 100, for example to perform one or more of a pre-treatment step, and a cooking step.

The user interface 104 may also be for use in providing the user of the apparatus 100 with information resulting from the method according to the invention. The control unit 102 may be configured to control the user interface 104 to provide information resulting from the method according to the invention. For example, in some embodiments, the control unit 102 of the apparatus 100 may be configured to control the user interface 104 to render (or output) information associated with one or more actions initiated by the control unit 102, for example an output when a particular step of the method is complete. For example, in embodiments in which apparatus 100 does not include a reservoir, control unit 102 may be configured to control user interface 104 to output when a pre-treatment step is complete so that the user can add water to the vessel for the cooking step.

The user interface 104 may also be configured to receive a user input. In other words, a user interface 104 may allow the user to manually enter data, instructions, or information, such as temperature and duration of a particular step of the method, or a particular rotational speed of a heating element 110 or a stirring tool 112.

Thus, the user interface 104 may be or may comprise any component that enables rendering or output of information, data or signals to the user. Alternatively or in addition, the user interface 104 may be or may comprise any component that enables the user to provide a user input, interact with and/or control the apparatus 100. For example, the user interface 104 may comprise one or more switches, one or more buttons, a keypad, a keyboard, a touch screen or an application (for example, on a tablet or smartphone), a display screen or any other visual rendering component, one or more lights, one or more speakers or any other audio rendering component, or any other user interface component, or combination of user interface components. For example, the user interface 104 may comprise an audio-rendering component configured to emit an audible alarm after conclusion of any step of the methods described herein.

In some embodiments (such as the illustrated embodiment of Figure 1), the apparatus 100 may comprise a memory unit 106 configured to store program code that can be executed by the control unit 102 to perform the method described herein. The memory unit 106 can also be used to store information, data, signals and measurements made or acquired by the control unit 102 of the apparatus 100 or by components, interfaces, units, and devices that are external to the apparatus 100. Thus, for example, the memory unit 106 of the apparatus 100 may be configured to store one or more actions to pre-treat, and cook, and the control unit 102 may be configured to acquire at least one action from the memory unit 106 to initiate such actions.

Returning back to Figure 1, in some embodiments, the apparatus 100 may also comprise a communications interface (or circuitry) 108 for enabling the apparatus 100 to communicate with (or connect to) any components, interfaces, units, and devices that are internal or external to the apparatus 100, such as a heating element 110 or stirring tool 112 if present. The communications interface 108 may communicate with any components, interfaces units, and devices wirelessly or via a wired connection. For example, in embodiments where the user interface 104 is external to the apparatus 100, the communications interface 108 may communicate with the external user interface wirelessly or via a wired connection. Similarly, in embodiments where one or more memory units 106 are external to the apparatus 100, the communications interface 108 may communicate with the external memory units wirelessly or via a wired connection.

Returning to Figure 1, apparatus 100 comprises optional heating element 110, which is in direct thermal contact with a cooking vessel of the apparatus (not shown) to heat the vessel conductively. The heating element 110 may be any type of heating element as is usually found in such appliances, and is controlled by control unit 102 to establish a predetermined temperature in the cooking pot, based on user input or a program stored in the memory unit 106. Different types of heating elements are known in the art and need no further discussion. In one embodiment, the cooking vessel may comprise the heating element 110. In one embodiment, the walls of the cooking vessel may comprise the heating element 110. For example, the cooking vessel may be formed of a metallic material, and power may be supplied directly to the cooking vessel to heat it by inductive means. Thus, references herein to heating the heating element 110, or providing power to the heating element 110 in order to heat it are to be understood as also including heating the cooking vessel, or providing power to the cooking vessel in order to heat it.

The operation of the heating element 110 allows heat to be provided to a cooking vessel of the apparatus (not shown in Figure 1) at any stage of the methods described herein. For example, the control unit 102 may control the heating element in order to control the temperature for a pre-treatment step to at least partially puff starch-containing food in the vessel, or the temperature of a subsequent cooking step.

For example, the control unit 102 may control the heating element 110 to directly heat the vessel to a temperature of at least 140 °C to at least partially puff starch-containing food present in the vessel before cooking the at least partially puffed starch-containing food.

For example, the control unit 102 may control the heating element 110 to directly heat the vessel to a temperature of less than 250 °C. In one embodiment, the control unit 102 may control the heating element 110 to heat the vessel to a temperature of less than 240 °C, for example less than 230 °C, for example less than 220 °C, for example less than 210 °C, for example less than 200 °C, for example less than 190 °C, for example less than 180 °C, for example less than 170 °C, for example less than 160 °C, for example less than 150 °C, for example about 140 °C. In one embodiment, the control unit 102 may control the heating element 110 to heat the vessel to a temperature of greater than 140 °C, for example greater than 150 °C, for example greater than 160 °C, for example greater than 170 °C, for example greater than 180 °C, for example greater than 190 °C, for example greater than 200 °C, for example greater than 210 °C, for example greater than 220 °C, for example greater than 230 °C, for example greater than 240 °C, for example about 250 °C.

In one example, the control unit 102 may control power supplied to the vessel to inductively heat the vessel to a temperature of at least 140 °C, to at least partially puff starch-containing food present in the vessel before cooking the at least partially puffed starch-containing food.

For example, the control unit 102 may control power supplied to the vessel to inductively heat the vessel to a temperature of less than 250 °C. In one embodiment, the control unit 102 may control power supplied to the vessel to inductively heat the vessel to a temperature of less than 240 °C, for example less than 230 °C, for example less than 220 °C, for example less than 210 °C, for example less than 200 °C, for example less than 190 °C, for example less than 180 °C, for example less than 170 °C, for example less than 160 °C, for example less than 150 °C, for example about 140 °C. In one embodiment, the control unit 102 may control power supplied to the vessel to inductively heat the vessel to a temperature of greater than 140 °C, for example greater than 150 °C, for example greater than 160 °C, for example greater than 170 °C, for example greater than 180 °C, for example greater than 190 °C, for example greater than 200 °C, for example greater than 210 °C, for example greater than 220 °C, for example greater than 230 °C, for example greater than 240 °C, for example about 250 °C.

In one embodiment, the control unit 102 may control heating of the vessel to a temperature as described above before the starch-containing food to be puffed is loaded into the vessel. In an alternative embodiment, the control unit 102 may control heating of the vessel to a temperature as described herein after the starch-containing food to be puffed has been loaded into the vessel.

In one embodiment, the control unit 102 may control the heating element 110 to control the temperature as described above for a pre-treatment or puffing step for a period of at least 5 seconds, for example at least 10 seconds, for example at least 15 seconds, for example at least 20 seconds, for example at least 30 seconds, for example at least 40 seconds, for example at least 50 seconds, for example at least about 60 seconds, for example at least about 2 minutes, for example at least about 3 minutes, for example at least about 4 minutes, for example about 5 minutes. In one embodiment, the control unit 102 may control the heating element 110 to control the temperature as described above for a puffing step for a period of less than 5 minutes, for example less than 4 minutes, for example less than 3 minutes, for example less than 2 minutes, for example less than 60 seconds, for example less than 50 seconds, for example less than 40 seconds, for example less than 30 seconds, for example less than 20 seconds, for example less than 15 seconds, for example less than 10 seconds, for example about 5 seconds. It will be understood that a higher puffing temperature may require a shorter duration of puffing time, while a lower puffing temperature may require a longer duration of puffing time.

In one embodiment, the control unit 102 may control power supplied to the vessel to inductively heat the vessel to a temperature as described above for a pre-treatment or puffing step for a period of at least 5 seconds, for example at least 10 seconds, for example at least 15 seconds, for example at least 20 seconds, for example at least 30 seconds, for example at least 40 seconds, for example at least 50 seconds, for example at least about 60 seconds, for example at least about 2 minutes, for example at least about 3 minutes, for example at least about 4 minutes, for example about 5 minutes. In one embodiment, the control unit 102 may control power supplied to the vessel to inductively heat the vessel to a temperature as described above for a pre-treatment or puffing step for a period of less than 5 minutes, for example less than 4 minutes, for example less than 3 minutes, for example less than 2 minutes, for example less than 60 seconds, for example less than 50 seconds, for example less than 40 seconds, for example less than 30 seconds, for example less than 20 seconds, for example less than 15 seconds, for example less than 10 seconds, for example about 5 seconds. It will be understood that a higher puffing temperature may require a shorter duration of puffing time, while a lower puffing temperature may require a longer duration of puffing time.

In one embodiment, the control unit 102 may control the heating element 110 to heat the cooking vessel to a temperature of at least 50 °C in a cooking step, for example at least 60 °C, for example at least 70 °C, at least 80 °C, at least 90 °C, to about 100 °C. In one embodiment, the control unit 102 may control the heating element 110 to heat the cooking vessel to a temperature of less than 100 °C in a cooking step, for example less than 90 °C, less than 80 °C, for example less than 70 °C, for example less than 60 °C, for example about 50 °C.

In one embodiment, the control unit 102 may control the heating element 110 to provide a temperature as described above for a cooking step for a period of at least 20 minutes, for example at least 21 minutes, for example at least 22 minutes, for example at least 23 minutes, for example at least 24 minutes, for example at least 25 minutes, for example about 30 minutes. In one embodiment, the control unit 102 may control the heating element 110 to provide a temperature as described above for a cooking step for a period of less than 30 minutes, for example less than 25 minutes, for example less than 24 minutes, for example less than 23 minutes, for example less than 22 minutes, for example less than 21 minutes, for example about 20 minutes. It will be understood that a higher cooking temperature will require a shorter cooking time, while a lower cooking temperature will require a longer cooking time.

In another embodiment, the control unit 102 may control power supplied to the vessel to inductively heat the vessel to a temperature of at least 50 °C in a cooking step, for example at least 60 °C, for example at least 70 °C, at least 80 °C, at least 90 °C, about 100 °C. In one embodiment, the control unit 102 may control power supplied to the vessel to inductively heat the vessel to a temperature of less than 100 °C in a cooking step, for example less than 90 °C, less than 80 °C, for example less than 70 °C, for example less than 60 °C, for example about 50 °C.

In one embodiment, the control unit 102 may control power supplied to the vessel to inductively heat the vessel to a temperature as described above for a cooking step for a period of at least 20 minutes, for example at least 21 minutes, for example at least 22 minutes, for example at least 23 minutes, for example at least 24 minutes, for example at least 25 minutes, for example about 30 minutes. In one embodiment, the control unit 102 may control power supplied to the vessel to inductively heat the vessel to a temperature as described above for a cooking step for a period of less than 30 minutes, for example less than 25 minutes, for example less than 24 minutes, for example less than 23 minutes, for example less than 22 minutes, for example less than 21 minutes, for example about 20 minutes. It will be understood that a higher cooking temperature will require a shorter cooking time, while a lower cooking temperature will require a longer cooking time.

In one embodiment, the control unit 102 may control the heating element 110 or control power provided to the vessel to provide a first temperature for a first time period of a cooking program, before controlling the heating element 110 or controlling power supplied to the vessel to provide a second temperature for a second time period of a cooking program. In one embodiment, a first cooking step may comprise directly heating the cooking vessel to a temperature of less than 75 °C, for example less than 70 °C, for example about 65 °C. In one embodiment, a first cooking step may comprise directly heating the cooking vessel to a temperature of greater than 65 °C, for example greater than 70 °C, for example about 75 °C. In one embodiment, the first cooking step may be for a period of less than 10 minutes, for example less than 9 minutes, for example less than 8 minutes, for example less than 7 minutes, for example less than 6 minutes, for example about 5 minutes. In one embodiment, the first cooking step may be for a period of greater than 5 minutes, for example greater than 6 minutes, for example greater than 7 minutes, for example greater than 8 minutes, for example greater than 9 minutes, for example about 10 minutes.

In one embodiment, the second step of a cooking program may comprise directly heating the cooking vessel to a temperature of greater than 75 °C, for example greater than 80 °C, for example greater than 85 °C, for example greater than 90 °C , for example greater than 95 °C , for example to about 100 °C. In one embodiment, the second step of a cooking program may comprise directly heating the cooking vessel to a temperature of less than 100 °C, for example less than 95 °C, for example less than 90 °C, for example less than 85 °C , for example less than 80 °C , for example to about 75 °C. In one embodiment, the first cooking step may be for a period of greater than 15 minutes, for example greater than 20 minutes, for example greater than 21 minutes, for example greater than 22 minutes, for example greater than 23 minutes, for example greater than 24 minutes, for example greater than 25 minutes, for example about 30 minutes. In one embodiment, the second cooking step may be for a period of less than 3 0 minutes, for example less than 25 minutes, for example less than 24 minutes, for example less than 23 minutes, for example less than 22 minutes, for example less than 21 minutes, for example less than 20 minutes, for example about 15 minutes.

As also shown in Figure 1, apparatus 100 further comprises stirring tool 112. Stirring tool 112 is provided in a cooking vessel of the apparatus 100 and is controlled by control unit 102. In one embodiment, control unit 102 controls a motor (not shown) to provide power to stirring tool 112. In one embodiment, stirring tool 112 is operable to rotate within the vessel to stir starch-containing food being puffed or cooked so as to ensure even distribution of heat. The stirring tool 112 maybe rotatable about a drive shaft removably mounted in a lower surface of a lid of the apparatus, such that it is lowered into the cooking vessel upon closure of the lid. Alternatively, the drive shaft may extend through a lower surface of the cooking vessel. In one example, stirring tool 112 and the drive shaft on which it is mounted may be detachably mounted from the apparatus 100.

In one example, the position of stirring tool 112 within the cooking vessel is programmable to be adjustable vertically and horizontally. Thus, in one example, control unit 102 maybe operable to control the vertical and horizontal position of stirring tool 112 within the cooking vessel. In one example, the vertical position of the stirring tool 112 may be adjustable by raising or lowering the drive shaft. In another example, the horizontal position of the stirring tool 112 within the cooking vessel may be adjustable by laterally adjusting the position of the drive shaft within the cooking vessel.

In one embodiment, the stirring tool 112 may be operable to be rotated about the drive shaft at a speed of less than 200 rpm. In other words, control unit 102 may control the rotational speed of the stirring tool 112. The speed of rotation of the stirring tool may depend on whether the starch-containing food (for example grains or legumes) being stirred are being stirred in a dry condition (i.e. in the absence of water, during the pre-treatment step), or in a wet condition (i.e. in the presence of water) as part of a "cake" or slurry during the cooking step. In one embodiment, the rotational speed of the stirring tool may be less than 200 rpm, for example less than 190 rpm, for example less than 180 rpm, for example less than 170 rpm, for example less than 160 rpm, for example less than 150 rpm, for example less than 140 rpm, for example less than 130 rpm, for example less than 120 rpm, for example less than 110 rpm, for example less than 110 rpm, for example about 100 rpm.

In one embodiment, the rotational speed of the stirring tool may be greater than 100 rpm, for example greater than 110 rpm, for example greater than 120 rpm, for example greater than 130 rpm, for example greater than 140 rpm, for example greater than 150 rpm, for example greater than 160 rpm, for example greater than 170 rpm, for example greater than 180 rpm, for example greater than 190 rpm, for example about 200 rpm. It will be understood that the rotational speed of the stirring tool 112 will depend on whether the starch-containing food is being milled under wet or dry conditions, and the degree of stirring required.

In one example, apparatus 100 includes a reservoir for storing water to be supplied to the vessel in the cooking step of the methods described. Control unit 102 is configured, in preparation for the cooking step, to trigger the supply of water from the reservoir to the vessel. For example, apparatus 100 may also be provided with a pump under the control of control unit 102 so that water can be pumped from the reservoir into the vessel. In one example, the reservoir is in thermal contact with heating element 110 and control unit 102 is configured to control heating element 110, so as to heat water present in the vessel to a temperature required for a cooking step of the methods described.

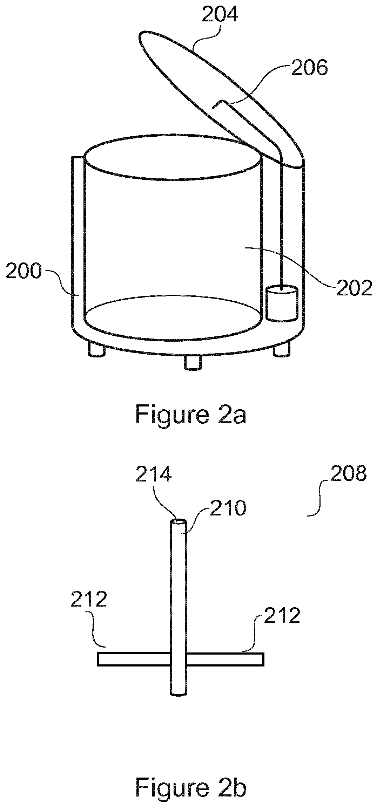

Figure 2a shows an apparatus 200 in accordance with one embodiment. Apparatus 200 is shown as a table-top domestic appliance, such as a rice cooker. Apparatus 200 comprises a cooking vessel 202, in which the starch-containing food to be at least partially puffed and cooked is held, together with water for the cooking step if required. In some examples, cooking vessel 202 is in thermal connection with a heating element (not shown), as discussed above. Apparatus 200 may be under the control of control unit 102 (not shown). Apparatus 202 further comprises a lid 204, which provides a seal with the cooking vessel 202 during the methods described. A motor 206 is also provided in apparatus 200, to provide power to the stirring tool 208, which is described in connection with Figure 2b.

Figure 2b shows a stirring tool 208 according to embodiments of the apparatus and methods described. Stirring tool 208 is provided with a drive shaft 210, which can be detachably mounted onto the underside of lid 204 via connection points 206 and 214. Thus, when drive shaft 210 is mounted via connection points 206 and 208 to the underside of lid 204 and the lid is in the closed position, stirring tool 208 is located within the cooking vessel 202. In the depicted embodiment, stirring tool 208 is shown as being provided with stirring element 212, extending perpendicularly to the axis of drive shaft 214. Stirring element 212 may be in the form of an elongate prong or paddle, and ensures that the starch-containing foods to be puffed and cooked are continuously in motion during the methods described to ensure uniform transfer of heat.

It will be appreciated that Figures 1 and 2 only show the components required to illustrate this aspect of the invention, and in a practical implementation the apparatus 100 or 200 may comprise additional components to those shown. For example, apparatus 100 or 200 may also comprise an air outlet. During the pre-treatment step, the air-outlet allows the expulsion of steam or moisture from the vessel, which will result in the pericarp cracking and the starch-containing food puffing more readily.

In another example, the apparatus 100 or 200 may comprise a temperature sensor for monitoring and controlling temperature of the vessel, a battery or other power supply for powering the apparatus 100 or 200 or means for connecting the apparatus 100 or 200 to a mains power supply, as well as the internal mechanism for powering the drive shaft.

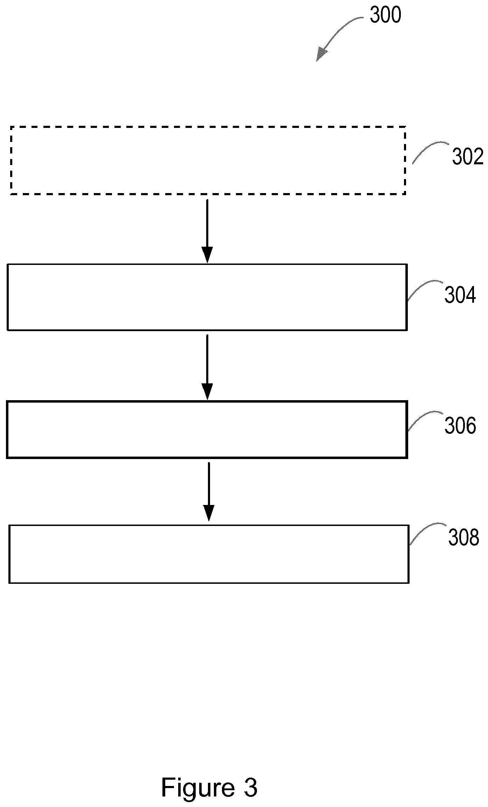

Figure 3 is a flow chart illustrating a method of cooking starch-containing foods according to one embodiment. In the described embodiment, method 300 maybe controlled by control unit 102 of apparatus 100, but it will be understood that the method may be controlled separately. In step 302 of method 300, a cooking vessel of an apparatus as described herein may optionally be pre-heated (as denoted by the dashed line) as described herein before receiving the starch-containing foods to be at least partially puffed. Step 304 comprises a pre-treatment step, in which the starch-containing foods (such as grains or legumes) are pre-treated in the vessel heated directly to a temperature of at least 150 °C to at least partially puff the starch containing food, as described in more detail herein. Then, in step 306, water or steam are introduced into the vessel. Finally, in step 308 the at least partially puffed starch-containing food is then cooked *in situ* in the cooking vessel.

The methods described are suited to the preparation and cooking of any starch-containing foods, which may for example comprise a fibre containing outer layer. In one embodiment, the starch-containing food comprises grains or legumes. In one embodiment, the methods and apparatus described are useful for cooking grains or legumes selected from brown rice, buckwheat, maize, oats, and soy beans such as red soy beans, green soy beans or black soy beans. All of these foodstuffs are characterized by a starchy central part, encased by an outer layer rich in fibre (and other nutrients).

In step 302 of method 300, a cooking vessel of an apparatus as described herein may optionally be pre-heated (as denoted by the dashed line) as described herein before receiving the starch-containing foods to be at least partially puffed. By pre-heating the vessel in this manner, a quick and efficient puffing step can take place

The pre-treatment step 304 causes the starch-containing food to at least partially expand. Expansion of starch-containing foods such as cereal grains is also referred to as 'puffing' or 'popping' and involves heating the grains in a low moisture atmosphere to create micro-bubbles within individual cereal grains which expand and then burst out of the grain.

Whilst the air may be completely dry, it also includes the heating of cereal grain in ambient air where the ambient air is of low moisture content. Fundamentally, the cereal grain is heated in the absence of any added liquid or moisture other than that present in ambient conditions and any residual moisture contained within the cereal grains themselves. Note that even if the residual moisture in the cereal grains is very low, expansion of the cereal grains is still possible.

Expansion of starch-containing food such as cereal grains occurs due to a reaction between starch and moisture when the cereal grains are heated. Although cereal grains contain limited moisture (usually between 10 and 20%), the moisture content of individual grains is still sufficient to cause them to expand as a result of the internal moisture within each grain turning to vapour when heated to a sufficiently high temperature in dry conditions for a short period of time. An increase in pressure within the grain, or thermal gradient across the grain, as a result of conversion of the residual moisture into super-heated vapour causes the grain to suddenly expand breaking its outer skin. The pressure builds up within the grain until an outer part or surface of the grain can no longer contain the pressure and it eventually 'pops' or bursts.

Generally, the expansion effect is more prevalent with a cereal grain that has a shell in the form of its hull or husk, or otherwise has a harder outer skin or surface relative to its inner core. The skin or shell initially traps the vapour within the grain before suddenly releasing it as the hull or husk bursts open. However, a pressure differential can be generated in many different types of grain and that the presence of a hull or husk is not essential to cause an internal pressure increase as a result of converting residual moisture within individual grains to vapour and the skin of a cereal grain can be sufficient to cause a pressure build up as a result of heating under dry or ambient conditions.

Any grain that has a slightly harder outer layer can expand according to this process, even though the effect may be smaller than with grain that retains its hull or husk. It is also possible to cause grains of corn to expand in this way. Corn has a soft outer membrane which is sufficient to cause a pressure build up within the grain as a result of the moisture contained within it turning to steam prior to bursting.

It has also been established that starch-containing foods that do not initially have a harder outer layer will also pop and expand as a result of heating. For example, polished white rice, which is not generally considered to possess a harder outside layer, will also expand as a result of heating. The popping or expansion effect is achieved due to the water molecules existing close to the surface of each rice grain evaporating quickly which results in an outer layer of the grain becoming relatively dry and hard whilst water molecules within the core of the rice grain are at the same time restricted from evaporating due to the dry, outer layer. The outer layer effectively becomes harder than the core and this generates a pressure imbalance across the rice grain. The pressure builds up until the outer layer can no longer contain the pressure and the grain bursts. Other cereal grains susceptible to expansion are wheat and sorghum.

The pre-treatment time and temperature may be controlled by control unit 102 for a duration and temperature as described previously. It will be understood that this step may be performed for a given time period, dependent on the type or variety of starch-containing food, and the size of the initial volume. A skilled person may appreciate when this pre-treatment step is complete from a visual inspection of the starch-containing food to evaluate the extent of puffing. Most cereal grains will expand rapidly and can be identified relative to those grains which are yet to expand and, when the majority of the grains have expanded.

In one example, the pre-treatment step comprises heating the starch-containing food in a vessel directly heated to a temperature of at least 140 °C to at least partially puff the starch-containing food. In one example, the pre-treatment step comprises heating the starch-containing food in a vessel directly heated to a temperature of at least 150 °C, for example at least 160 °C, for example at least 170 °C, for example at least 180 °C, for example at least 100 °C, for example at least 200 °C, for example at least 210 °C, for example at least 220 °C, for example at least 230 °C, for example at least 240 °C, for example about 250 °C.

In one example, the pre-treatment step comprises heating the starch-containing food in a vessel directly heated to a temperature of less than 250 °C to at least partially puff the starch-containing food. In one example, the pre-treatment step comprises heating the starch-containing food in a vessel directly heated to a temperature of less than 240 °C, for example less than 230 °C, for example less than 220 °C, for example less than 210 °C, for example less than 200 °C, for example less than 190 °C, for example less than 180 °C, for example less than 170 °C, for example less than 160 °C, for example less than 150 °C, for example about 140 °C.

In one embodiment, the pre-treatment or puffing step may be for a period of at least 5 seconds, for example at least 10 seconds, for example at least 15 seconds, for example at least 20 seconds, for example at least 30 seconds, for example at least 40 seconds, for example at least 50 seconds, for example at least about 60 seconds, for example at least about 2 minutes, for example at least about 3 minutes, for example at least about 4 minutes, for example about 5 minutes. In one embodiment, the pre-treatment or puffing step may be for a period of less than 5 minutes, for example less than 4 minutes, for example less than 3 minutes, for example less than 2 minutes, for example less than 60 seconds, for example less than 50 seconds, for example less than 40 seconds, for example less than 30 seconds, for example less than 20 seconds, for example less than 15 seconds, for example less than 10 seconds, for example about 5 seconds. It will be understood that a higher puffing temperature may require a shorter duration of puffing time, while a lower puffing temperature may require a longer duration of puffing time.

In step 306, water or steam or both are added to the vessel. In one embodiment, a user manually adds water to the vessel containing the at least partially puffed starch-containing food after termination of the pre-treatment step. In one example, the apparatus may supply water or steam or both from a reservoir in the apparatus into the vessel so that the at least partially puffed starch-containing food can cook. If the at least partially puffed starch-containing food is subjected to steam in the cooking step 308, then it maybe soaked with water in step 306 prior to cooking. The water may be pre-heated before being added to the vessel. For example, a user or the apparatus may add water at a temperature of at least 50 °C.

In step 308 the at least partially puffed starch-containing food is then cooked *in situ* in the cooking vessel in an atmosphere of relatively high moisture, generated from the introduction of water or steam or both into the vessel in the preceding step. Preferably, the step of supplying water to the vessel and the cooking step are initiated immediately after the pre-treatment step has been completed, although a certain time period may be allowed to elapse between the steps.

The cooking time and temperature may be controlled by control unit 102 for a duration and temperature as described previously. In one example, the water in the reservoir may initially be at room or ambient temperature, then heated until reaching boiling point, so that steam generated by the boiling water can be introduced into the vessel. In another example, the water is heated in the reservoir and then supplied to the vessel. In one example, the water is heated in the reservoir to a temperature of between 60 and 80 °C or other such temperature as described herein in connection with the cooking step and then supplied to the vessel. In another example, the water is supplied at ambient temperature from the reservoir to the vessel and heated once it is in the vessel. In one example, the water in the reservoir is heated by heating element 110 which is in thermal contact with the reservoir. In one example, the water in the reservoir is heated by heating element 110 which is in thermal contact with the reservoir during the pre-treatment step in which heating element 110 is heating vessel 100.

In one embodiment, the temperature of the water introduced into the vessel is equivalent, or close, to the starch gelatinization temperature of the starch-containing food present in the vessel. Starch gelatinization is the process of breaking down the intermolecular bonds of starch molecules in the presence of water and heat. Penetration of water alters the starch granule structure and causes swelling. For rice, the starch gelatinization temperature is typically around 60 to 80 °C.

The cooking and/or steaming of the at least partially puffed starch-containing food improves the texture, taste and mouth-feel compared to starch-containing food which has been expanded but not subsequently subjected to steam or heated water, or to starch-containing food that has been cooked in steam or heated water but which was not initially at least partially puffed.

Another advantage of the methods described is that the resultant volume of starch-containing food is greater compared with the volume of starch-containing food that has been prepared using only one of the steps 304 and 308 alone.

### Example

Brown rice was subjected to a cooking method in accordance with the methods described herein, with specific conditions shown in Table 1.

**Table 1**

| Example | Example 1 | Example 2 |
|---|---|---|
| Pre-treatment temperature | 170 °C | 180 °C |
| Pre-treatment time | 30 seconds | 1 minute |
| Cooking temperature (in water) | 100 °C | 100 °C |
| Cooking time | 30 minutes | 30 minutes |
| Hardness/Texture | 4456 g | 2861 g |

As a control, brown rice was also cooked in a Philips HD 4568 rice cooker on the "brown rice" cooking setting. The hardness or texture of all examples was then tested using the TA.XT plus Texture Analyzer from Stable Micro Systems (Software Exponent 32; 50 Kg Load cell; TA. Setting Program: Pre-Test Speed: 1.00 mm/sec; Test Speed: 0.50 mm/sec; Post-Test Speed: 1.00 mm/sec; Target Mode: Strain; Strain: 70.0%; Time: 5.00 sec; Trigger Type: Force; Trigger Force: 100.0g; Tare Mode: Auto; Advanced Options: On), with the results for rice cooked in accordance with the methods described herein shown in Table 1. The hardness of brown rice subjected to a pre-treatment of 180 °C for 1 minute, followed by 30 minutes cooking in boiling water was reduced from 4829 g to 2861 g, a value which is comparable with cooked white rice, demonstrating that the pre-treatment results not only a significant improvement in the palatable texture of brown rice cooked in accordance with the methods described, but also a significant reduction in the length of time required to cook brown rice to this level of hardness.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A method (300) of cooking a starch-containing food, the method comprising:
pre-treating (304) the starch-containing food in a vessel heated directly to a temperature greater than 140 °C to at least partially puff the starch-containing food; and
cooking (308) the at least partially puffed starch-containing food in one or both of water and steam;
wherein the cooking step (308) is performed subsequent to the pre-treating step (304) whilst the at least partially puffed starch-containing food remains in the vessel.

2. A method (300) according to claim 1, wherein the vessel is heated conductively or inductively.

3. A method (300) according to claim 1 or 2, including the step of pre-heating (302) the vessel prior to placing the starch-containing food in the vessel.

4. A method (300) according to any one of claims 1 to 3, further comprising a stirring step in one or both of the pre-treating and cooking steps to evenly distribute heat.

5. A method (300) according to any one of the preceding claims, further comprising providing water (306) from a reservoir to the vessel in the cooking step.

6. A method (300) according to any one of the preceding claims, wherein the method comprises pre-treating (304) the starch-containing food for less than 2 minutes in a vessel heated directly to a temperature greater than 160 °C.

7. A method (300) according to any one of the preceding claims, wherein the cooking step (308) comprises subjecting the at least partially puffed starch-containing food to water having a temperature below boiling point upon commencement of the cooking step (308), and heating the water during performance of the cooking step (308).

8. An apparatus (100, 200) for cooking a starch-containing food, the apparatus comprising:
a vessel (202) to receive the starch-containing food;
a control unit (102) being configured, in a pre-treating step, to control heat in the vessel (202) to at least partially puff starch-containing food; the control unit (102) being further configured, in a cooking step, to control heat in the vessel (202) to cook the at least partially puffed starch-containing food in one or both of water and steam;
wherein the apparatus (100, 200) is configured to directly heat the vessel (202) during one or both of the pre-treating step and the cooking step.

9. An apparatus (100, 200) according to claim 8,
wherein the apparatus (100, 200) further comprises a heater (110) and the control unit (102) controls the heater (110) to control heat in the vessel (202) by conduction from the heater; or
wherein the control unit (102) controls heat in the vessel(202) by induction.

10. An apparatus (100, 200) according to claim 8 or claim 9, wherein the apparatus (100, 200) further comprises a stirring tool (112) provided within the vessel (202).

11. An apparatus (100, 200) according to any one of claims 8 to 10, wherein the apparatus (100, 200) further comprises an air outlet valve for releasing air or moisture from the vessel.

12. An apparatus (100, 200) according to any one of claims 8 to 11, wherein the vessel (202) comprises a fluid-impermeable wall.

13. An apparatus (100, 200) according to any one of claims 8 to 12, wherein the apparatus (100, 200) further comprises a reservoir for containing water to be provided into the vessel.

14. An apparatus (100, 200) according to any of claims 9 to 13 wherein the heater (110) is positioned so that water contained in the reservoir is pre-heated by the heater (110) prior to flowing out from the reservoir.

15. A computer program product comprising a computer readable medium having computer readable code embodied therein, the computer readable code being configured such that, on execution by a control unit of an apparatus for cooking a starch-containing food, the control unit is caused to perform the method of any one of claims 1 to 7.
